# EUROPÄISCHE PATENTSCHRIFT

(11) **EP 2 578 930 B1**
(45) Veröffentlichungstag und Bekanntmachung des Hinweises auf die Patenterteilung: **16.07.2014**
(21) Anmeldenummer: 12180155.9
(22) Anmeldetag: 10.08.2012
(51) Int. Cl.: F21V 5/04, F21Y 101/02, F21W 131/103

(54) **Lichtmodul für eine Außenleuchte**
Light module for an external light
Module d'éclairage pour lampe extérieure

(30) Priorität: 11.08.2011 DE 102011052585
(43) Veröffentlichungstag der Anmeldung: 10.04.2013
(73) Patentinhaber: Hella KGaA Hueck & Co, 59552 Lippstadt (DE)
(72) Erfinder: Möller, Dennis, 59557 Lippstadt (DE)
(74) Vertreter: Lohr, Georg

(56) Entgegenhaltungen:
- EP-A1- 2 071 230
- WO-A1-2011/023927
- DE-T2- 69 734 234
- US-A1- 2003 202 241
- US-A1- 2008 043 466

## Beschreibung

### Technisches Gebiet

Die vorliegende Erfindung betrifft ein Lichtmodul für eine Außenleuchte, eine Abdeckung für ein Lichtmodul sowie eine Außenleuchte aufweisend zumindest ein Lichtmodul.

### Stand der Technik

Lichtmodule für Außenleuchten sowie entsprechende Außenleuchten sind beispielsweise aus der EP 0 874 964 A bekannt. Sie werden eingesetzt, um Außenbereiche zumindest teilweise auszuleuchten. Hierfür sind die einzelnen Lichtmodule für Außenleuchten mit Leuchtmitteln versehen, welche in der Lage sind, Licht durch eine Abschlussscheibe, die lichtdurchlässig ist, zu emittieren. Um das von den Leuchtmitteln erzeugte Licht, insbesondere das von LEDs erzeugte Licht in gewünschter Weise zu fokussieren, zu bündeln beziehungsweise zu lenken, sind bei bekannten Lichtmodulen optische Systeme, häufig in Form von Linsensystemen, vorhanden. Dabei kann, um für jedes einzelne Leuchtmittel, zum Beispiel bei einer Vielzahl einzelner LEDs, die gesamte Lichtmenge effizient bündeln und fokussieren zu können, für jedes einzelne Leuchtmittel ein eigenes optisches System eingesetzt werden. So kann zum Beispiel bei LEDs auf jeder LED ein Linsensystem aufgesetzt sein. Alternativ dazu ist es möglich, dass wie in der EP 0 874 964 A offenbart, die Abschlussscheibe selbst ein einziges optisches System für alle Leuchtmittel ist. Nachteil bei einem einzigen optischen System für alle Leuchtmittel ist die mangelnde Einflussnahme auf die Fokussierung des Lichts einzelner Leuchtmittel. Der Nachteil einer Vielzahl einzelner optischer Systeme ist der hohe Komplexitätsgrad, und der damit einhergehende hohe Montageaufwand.

### Darstellung der Erfindung

Es ist Aufgabe der vorliegenden Erfindung die voranstehend beschriebenen Nachteile bekannter Lichtmodule zumindest teilweise zu beheben. Insbesondere ist es Aufgabe der vorliegenden Erfindung ein Lichtmodul, eine Abdeckung für ein Lichtmodul sowie eine Außenleuchte, aufweisend zumindest ein Lichtmodul zur Verfügung zu stellen, welche in kostengünstiger und einfacher Weise die Herstellung und Montage einer Vielzahl optischer Systeme für alle Leuchtmittel zur Verfügung stellen. Insbesondere soll auch eine besonders reinigungsfreundliche Konstruktion vorhanden sein.

Diese Aufgabe wird durch eine Vorrichtung nach den unabhängigen Ansprüchen gelöst. Vorteilhafte Ausgestaltungen der Erfindung sind in den Unteransprüchen angegeben.

Ein erfindungsgemäßes Lichtmodul für eine Außenleuchte weist eine Platinenaufnahme sowie zumindest eine in der Platinenaufnahme angeordnete Platine mit einer Vielzahl von Leuchtmitteln auf. Bei den Leuchtmitteln handelt es sich um LEDs, sogenannte Light Emitting Diodes. Darüber hinaus ist eine Abdeckung vorgesehen, welche die Platinenaufnahme sowie die darin angeordnete Platine abdeckt und eine Abschlussscheibe aufweist, die lichtdurchlässig ist, um das vom Leuchtmittel erzeugte Licht durchzulassen. Mit anderen Worten ist die Abdeckung zumindest in einem bestimmten Bereich als Abschlussscheibe in transparenter Weise ausgebildet. Als Material für die Abdeckung ist dabei vorzugsweise ein Kunststoff vorgesehen, sodass die gesamte Abdeckung im Spritzgussverfahren herstellbar ist.

Ein erfindungsgemäßes Lichtmodul zeichnet sich dadurch aus, dass auf der Innenseite der Abschlussscheibe für jedes Leuchtmittel ein optisches System für die Beeinflussung des Strahlengangs durch die Abschlussscheibe angeordnet ist. Mit anderen Worten ist das optische System für jedes Leuchtmittel auf die Innenseite der Abschlussscheibe beschränkt. Die Außenseite ist unbeeinträchtigt, sodass die Außenseite der Abschlussscheibe im Wesentlichen frei gestaltbar ist. Die freie Gestaltbarkeit der Außenseite der Abschlussscheibe bringt freiere Designmöglichkeiten für die optische Gestaltung der Abschlussscheibe mit sich. Insbesondere wird es auf diese Weise möglich, Teile der Außenseite der Abschlussscheibe zu bedrucken beziehungsweise vollständig eben auszubilden. Damit können zusätzliche Designmerkmale, wie auch eine verbesserte Reinigungsmöglichkeit des gesamten Lichtmoduls zu Verfügung gestellt werden. Schmutzpartikel haften auf einer frei konstruierbaren Außenseite der Abschlussscheibe, insbesondere auf einer glatten Außenseite, weniger leicht an.

Durch das Ausbilden des optischen Systems auf der Innenseite wird darüber hinaus eine verbesserte Lichtverteilung möglich. Erfindungsgemäß ist jeweils optisches System für jeweils ein Leuchtmittel vorgesehen. Auf diese Weise wird es möglich, eine Vielzahl von optischen Systemen für eine Vielzahl von Leuchtmitteln zur Verfügung zu stellen, die alle in einem einzigen Bauteil, nämlich der Abschlussscheibe der Abdeckung, integriert sind. Damit wird die Komplexität des Gesamtsystems des Lichtmoduls um ein Vielfaches reduziert. Durch die Montage der Abschlussscheibe erfolgt automatisch auch die Montage der optischen Systeme, sodass eine Vielzahl von Montageschritten entfällt. Darüber hinaus wird die Fertigung vereinfacht, da ein einziges Bauteil in Form der Abschlussscheibe alle optischen Systeme für alle Leuchtmittel aufweist.

Bei einem erfindungsgemäßen Lichtmodul sind die optischen Systeme an der Innenseite, nur an der Innenseite der Abschlussscheibe vorgesehen. Damit sind die optischen Systeme vor Beeinflussung von außen geschützt. Insbesondere mechanische Beeinträchtigungen durch Feststoffpartikel wie zum Beispiel Hagelkörner sind auf diese Weise vom optischen System ferngehalten, sodass ein mechanischer Schutz besteht. Eine mechanische Beeinflussung, insbesondere eine mechanische Zerstörung der optischen Systeme wird dabei ausgeschlossen beziehungsweise eine dementsprechende Gefahr reduziert. Ein weiterer Vorteil eines erfindungsgemäßen Lichtmoduls liegt darin, dass die optischen Systeme und die Abschlussscheibe ein einziges Bauteil sind. Dementsprechend muss Licht, ausgehend von jedem Leuchtmittel, nur dieses einzige Bauteil durchqueren. Dementsprechend reduziert sich der Verlust deutlich, sodass ein erhöhter optischer Wirkungsgrad von insbesondere größer als 90% erzielbar wird. Damit können wiederum kleinere und kostengünstigere, weil schwächere Leuchtmittel Verwendung finden.

Erfindungsgemäß umfasst ein optisches System ein zentrales optisches Element, welches unmittelbar über dem Leuchtmittel bzw. der LED angeordnet ist. Anschließend an das zentrale optische Element sind zwei äußere optische Bereiche an gegenüberliegenden Seiten des zentralen optischen Elements. Das zentrale optische Element so wie die äußeren optischen Bereiche werden durch ein zweites optisches Element seitlich umschlossen. Schließlich ist noch ein drittes optisches Element vorgesehen, welches parallel zu einer Längsseite des zweiten optischen Elements verläuft.

Es kann vorteilhaft sein, wenn bei einem erfindungsgemäßen Lichtmodul die Außenseite der Abschlussscheibe planar ausgebildet ist. Insbesondere sind bei einem erfindungsgemäßen Lichtmodul die optischen Systeme integral, insbesondere monolithisch mit der Abschlussscheibe ausgebildet. Durch die planare Ausbildung wird die Außenseite des optischen Systems noch leichter reinigbar. Darüber hinaus ist ein Reinigungsintervall von größerer Dauer vorsehbar, da Verschmutzungen an einer planaren Ebene weniger leicht anhaften können. Unter planarer Außenfläche ist dabei im Wesentlichen eine ebene Fläche, insbesondere eine ebene Fläche, zu verstehen. Das bedeutet, dass Krümmungen oder Verwerfungen nicht vorhanden sind und insbesondere eine optische Beeinflussung der Außenseite unterbleibt. Darüber hinaus ist es möglich, bei einer planaren Außenseite der Abschlussscheibe diese zu bedrucken oder mit Folie zu bekleben. Dies ermöglicht es besonders kostengünstig und einfach, Lichtfilter auf der Außenseite der Abschlussscheibe vorzusehen. Auch das Vorsehen von Schriftzügen, die sich im Lichtbild auf dem Boden des ausgeleuchteten Bereichs wiederfinden, ist auf diese Weise leicht ausführbar. Das integrale, insbesondere monolithische Ausbilden erzeugt eine Vereinfachung hinsichtlich des Fertigungsprozesses. So sind Abschlussscheibe und optisches System in einem einzigen Schritt, zum Beispiel durch ein Spritzgussverfahren, herstellbar. Darüber hinaus wird der Aufwand für den Einbau noch geringer und der Einbau selbst beschleunigt. Selbstverständlich sind auch trotz integraler, insbesondere monolithischer Ausbildungsweise unterschiedliche Materialien, zum Beispiel durch einen Zweikomponentenspritzguss, denkbar.

Ein weiterer Vorteil ist es, wenn bei einem erfindungsgemäßen Lichtmodul die optischen Systeme für eine asymmetrische Verteilung des Lichts ausgebildet sind. Insbesondere sind dabei alle optischen Systeme identisch beziehungsweise im Wesentlichen identisch zueinander ausgebildet. Dies vereinfacht die Herstellung sowie die Entwicklung eines solchen optischen Systems deutlich. Durch die asymmetrische Verteilung des Lichts können auch komplexe Ausleuchtungsformen erzielt werden. Insbesondere kann von einfachen runden Ausleuchtbereichen zu rechteckigen Ausleuchtformen übergegangen werden. Darüber hinaus wird es durch die asymmetrische Verteilung des Lichts möglich, dass auch bei komplexen Ausleuchtbereichen eine im Wesentlichen konstante Ausleuchtung über den gesamten Leuchtbereich möglich wird. Auch Randbereiche, die sonst zum Verschwimmen mit der Umgebung neigen, können auf diese Weise im Wesentlichen vollständig ausgeleuchtet werden. Mit anderen Worten kann auf diese Weise die Hell-Dunkelgrenze zwischen dem ausgeleuchteten Bereich und dem dunklen Bereich schärfer gezeichnet werden.

Weiterhin ist mindestens ein optisches System durch eine Vertiefung auf der Innenseite der Abschlussscheibe ausgebildet. Diese Vertiefung ist vorzugsweise derart ausgeführt, dass sie die LEDs, also die Leuchtmittel, in dieser Vertiefung aufnehmen kann. Darüber hinaus kann die Vertiefung derart ausgestaltet sein, dass die in der Dicke maximale Erstreckung der Abschlussscheibe mit der Platinenaufnahme und/oder der Platine in Kontakt kommt. Mit anderen Worten kann es vorteilhaft sein, wenn die Abschlussscheibe die Platine zwischen sich selbst und der Platinenaufnahme einklemmt. Damit wird jedes einzelne Leuchtmittel in einer solchen Vertiefung aufgenommen und sozusagen von ihr umhüllt. Damit wird eine Konstruktion erzielt, wie sie bisher nur durch eine Vielzahl einzelner optischer Systeme erzielbar war, nämlich durch das Aufsetzen einzelner Linsensysteme auf jedes einzelne Leuchtmittel. Durch die erfindungsgemäße Anordnung werden solche individuellen optischen Systeme für jedes einzelne Leuchtmittel zur Verfügung gestellt, jedoch durch die Ausbildung in der Abschlussscheibe eine einfache Montage aller optischen Systeme gleichzeitig bei vollständiger Umhüllung möglich. Neben diesem Vorteil wird eine besonders flache Bauweise des gesamten Lichtmoduls möglich. Die Fertigung, wie auch die Montage und darüber hinaus der Transport beziehungsweise der benötigte Bauraum für ein solches Lichtmodul wird insgesamt optimiert.

Die optischen Systeme sind zum Beispiel an der Innenseite als Vertiefung oder als Erhöhung ausgebildet. Auf diese Weise werden optisch aktive Flächen gebildet, die in gewünschter Weise eine Beeinflussung des Strahlengangs durch die Abschlussscheibe zur Folge haben. Die optischen Systeme sind auch bei dieser Ausführungsform vorzugsweise Linsensysteme und/oder Reflektorsysteme, die zur unterschiedlichen Brechung/Reflexion von Licht dienen.

Im Rahmen der vorliegenden Erfindung ist es vorteilhaft, wenn bei einem erfindungsgemäßen Lichtmodul jedes optische System in einer ersten Querschnittsebene einen ersten Querschnitt und in einer zu der ersten Querschnittsebene senkrechten zweiten Querschnittsebene einen zweiten Querschnitt aufweist, wobei der erste Querschnitt und der zweite Querschnitt unterschiedlich ausgeformt sind. Das bedeutet, dass ein asymmetrischer Ausbildungsverlauf für die einzelnen Querschnitte, insgesamt also für das optische System, vorgesehen ist. Dies gilt insbesondere dann, wenn es sich bei dem optischen System um eine Vertiefung auf der Innenseite der Abschlussscheibe handelt. Die asymmetrische Ausbildung hinsichtlich der einzelnen Querschnitte unterstützt eine vorteilhafte asymmetrische Ausleuchtung im Leuchtbereich des Lichtmoduls.

Gemäß der vorliegenden Erfindung kann es weiter vorteilhaft sein, wenn das zentrale optische Element in dem ersten Querschnitt zumindest einen konkaven Abschnitt aufweist.

Weiterhin ist es vorteilhaft, wenn die zwei äußeren optischen Bereiche in dem ersten Querschnitt konvex ausgebildet sind.

In einer weiteren vorteilhaften Ausgestaltung sind zwischen dem zentralen optischen Element und den beiden äußeren optischen Bereichen jeweils ein Verbindungsabschnitt vorgesehen. Besonders bevorzugt verläuft dieser Verbindungsabschnitt parallel zum Strahlengang aus der LED. Somit wird Licht im Strahlengang aus der LED durch den Verbindungsabschnitt nicht beeinflusst. Bevorzugt ist dadurch eine Verbreiterung des gesamten optischen Systems möglich, ohne dass Licht verloren geht und gleichzeitig eine Verbreiterung der Beeinflussung des erzeugten Strahlengangs vom Leuchtmittel möglich wird. Darüber hinaus werden die einzelnen optisch aktiven Bereiche bzw. Elemente, freier zueinander anordnenbar, ohne die Lichtausrichtung durch zusätzliche optisch aktive Flächen zu beeinflussen.

Besonders bevorzugt weist das zweite optische Element in dem ersten Querschnitt konvexe Seiten auf. Weiterhin ist es bevorzugt, wenn das zweite optische Element in dem zweiten Querschnitt konvexe Seiten und sowie wenigstens eine konkave Seite aufweist. Dadurch wird eine Überlappung des Strahlengangs nach dem Verlassen der Abschlussscheibe erzeugt. Diese Überlappung erzeugt unterschiedlich starke Fokussierungen, die sich insbesondere in einer vergrößerten Menge an Licht im Randbereich des ausgeleuchteten Bereiches niederschlagen. Damit wird der Randbereich stärker ausgeleuchtet, sodass eine verbesserte Randausleuchtung und damit eine große Reichweite erzielt werden kann. Selbstverständlich können auch mehrere konkave Abschnitte auf den zentralen konvexen Abschnitt folgen. Bevorzugt bilden die konkaven Abschnitte unter anderem eine nasenförmige Fortsetzung aus. Durch diesen Fortsatz der konkaven Ausführung wird ein fast vollständiges Umhüllen des Leuchtmittels ermöglicht. Damit kann ein großer Teil des Lichts, welches von dem jeweiligen Leuchtmittel erzeugt wird von einer optisch aktiven Fläche, also von den konvexen und konkaven Abschnitten, aufgenommen und verwendet werden. Auch dies dient dazu, lichtschwächere und damit kostengünstigere Leuchtmittel einzusetzen, da deren erzeugtes Licht fast vollständig für die gewünschte Ausleuchtung eingesetzt werden kann. Das "Umgeben" kann dabei sowohl direkt, als auch indirekt erfolgen. Insbesondere können auf diese Weise auch einzelne optisch aktive Flächen durch optisch nicht oder weniger aktive Flächen, insbesondere ebene Flächen, verbunden werden.

Es ist bevorzugt, wenn das dritte optische Element (75) in dem zweiten Querschnitt konvexe Seiten aufweist.

Ebenfalls vorteilhaft ist es, wenn bei einem erfindungsgemäßen Lichtmodul die Leuchtmittel außerhalb der Mitte des jeweiligen optischen Systems angeordnet sind. Darunter ist zu verstehen, dass die Mitte in Bezug auf zumindest zwei Symmetrierichtungen, also in Bezug auf zumindest zwei zueinander senkrecht stehende Querschnittsebenen als mittige Ausrichtung des optischen Systems zu verstehen ist. Das Leuchtmittel ist außerhalb dieser Mitte vorgesehen, sodass eine asymmetrische Ausrichtung der Lichtverteilung noch leichter erzielt werden kann.

Ebenfalls Gegenstand der Erfindung ist eine Abdeckung für ein Lichtmodul bzw. eine Außenleuchte mit den Merkmalen eines erfindungsgemäßen Lichtmoduls, aufweisend eine Abschlussscheibe, an deren Innenseite für jedes Leuchtmittel ein optisches System für die Beeinflussung des Strahlengangs durch die Abschlussscheibe angeordnet ist. Eine erfindungsgemäße Abdeckung dient für ein erfindungsgemäßes Lichtmodul und ist entsprechend ausgestaltet, sodass hierfür die gleichen Vorteile in Betracht kommen, wie sie ausführlich mit Bezug auf ein erfindungsgemäßes Lichtmodul erläutert worden sind.

Ebenfalls Gegenstand der Erfindung ist auch eine Außenleuchte, aufweisend zumindest ein erfindungsgemäßes Lichtmodul. Dementsprechend gelten auch hier die gleichen Vorteile, wie sie ausführlich mit Bezug auf ein erfindungsgemäßes Lichtmodul erläutert worden sind.

Es gelten Merkmale und Details, die im Zusammenhang mit dem erfindungsgemäßen Lichtmodul beschrieben sind selbstverständlich auch im Zusammenhang mit der erfindungsgemäßen Abdeckung sowie der erfindungsgemäßen Außenleuchte und jeweils umgekehrt, sodass bezüglich der Offenbarung zu den einzelnen Erfindungsaspekten stets wechselseitig Bezug genommen wird beziehungsweise werden kann.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt eine erste Ausführungsform einer erfindungsgemäßen Außenleuchte.
- Figur 2: zeigt eine Ausführungsform eines erfindungsgemäßen Lichtmoduls.
- Figur 3: zeigt eine Ausführungsform einer erfindungsgemäßen Abdeckung.
- Figur 4: zeigt ein optisches System in einer ersten Ansicht.
- Figur 5: zeigt ein optisches System in einer zweiten Ansicht.
- Figur 6: zeigt ein optisches System in einer seitlichen Ansicht.
- Figur 7: zeigt ein optisches System in einer Draufsicht.
- Figur 8: zeigt eine Ausführungsform eines optischen Systems in einem ersten Querschnitt.
- Figur 9: zeigt die Ausführungsform der vorhergehenden Figur in einem zweiten Querschnitt.
- Figur 10: zeigt Strahlengänge in dem ersten Querschnitt.
- Figur 11: zeigt Strahlengänge in dem zweiten Querschnitt.

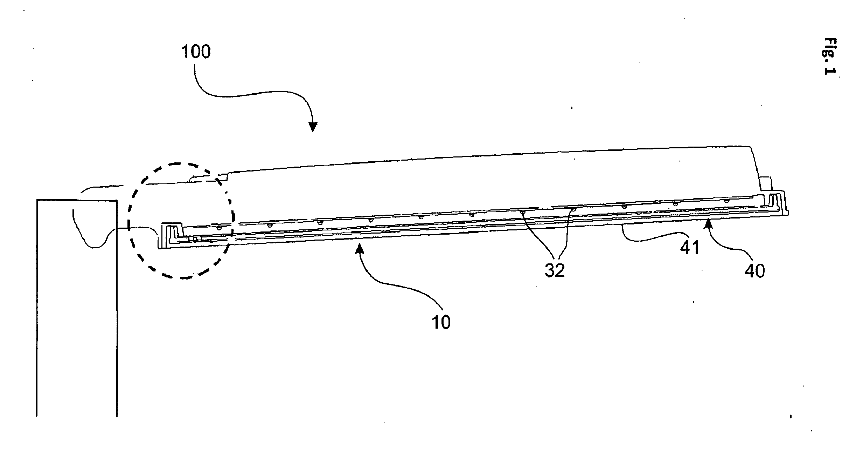

In Figur 1 ist eine erste Ausführungsform eines erfindungsgemäßen Lichtmoduls 10 dargestellt. Dieses ist in einer Außenleuchte 100 von unten eingesetzt und mit dieser kraftschlüssig verbunden. Die Außenleuchte 100 wiederum ist an einer Halterung, insbesondere an einem Mast, befestigt. Das Lichtmodul 10 dieser Ausführungsform ist mit einer Vielzahl von Leuchtmitteln 32 ausgestattet, die bei dieser Ausführungsform LEDs sind. Die Leuchtmittel 32 sind mit einer Abschlussscheibe 41 abgedeckt, die Teil einer Abdeckung 40 ist. Der Rahmen der Abdeckung 40 ist in einem Gehäuse der Außenleuchte 100 eingebracht und mit diesem mechanisch verbunden.

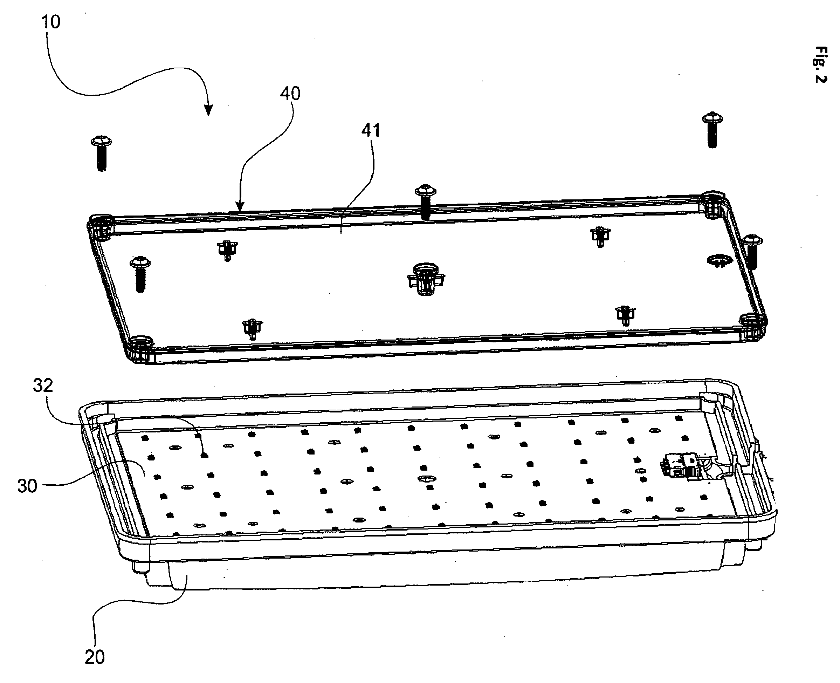

Eine Ausführungsform eines solchen Lichtmoduls 10 ist zum Beispiel der Figur 2 zu entnehmen. Dort ist gut zu erkennen, dass eine Platinenaufnahme 30 die Vielzahl von Leuchtmitteln 32 in Form von LEDs aufweist. Diese Platine 30 und damit auch die Leuchtmittel 32 ist eingeschlossen zwischen zwei Bauteilen, nämlich der Abdeckung 40 und der Platinenaufnahme 20. Diese schließen die Platine 30 im Wesentlichen dicht ab, sodass die Leuchtmittel 32 und die Platine 30 geschützt darin angeordnet sind.

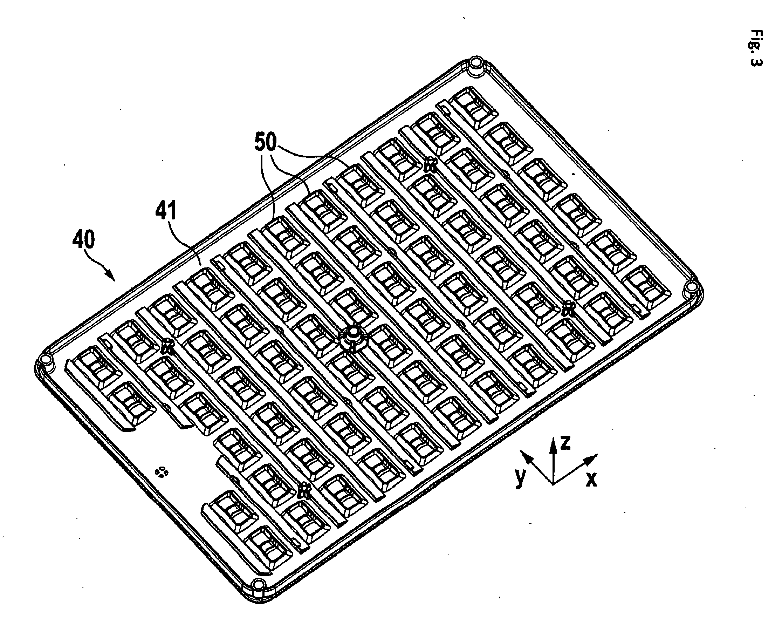

Figur 3 zeigt eine Ausführungsform einer Abdeckung 40. Diese ist mit einer Vielzahl von optischen Systemen 50 in der Abschlussscheibe 41 versehen. Die Abschlussscheibe 41 ist vorzugsweise aus Kunststoff hergestellt, um kostengünstig einen transparenten Bereich zu erzeugen. Die einzelnen optischen Systeme 50 sind jedem Leuchtmittel 32 zugeordnet, sodass durch das Einsetzen der Abdeckung 40 eine automatische Montage sämtlicher optischer Systeme 50 gleichzeitig und zugeordnet zu den Leuchtmitteln 32 erfolgt. Es ist hier noch ein Koordinatensystem mit drei Achsen x, y und z zur Erleichterung der räumlichen Zuordnung dargestellt. Die x-Achse weist von der Halterung der Leuchteinheit weg in Längsrichtung der hier dargestellten Anordnung im einer Ebene der Abschlussscheibe 41. Quer hierzu, ebenfalls in der Ebene der Abschlussscheibe verläuft die y-Achse. Senkrecht zu den beiden vorgenannten Achsen steht die z-Achse.

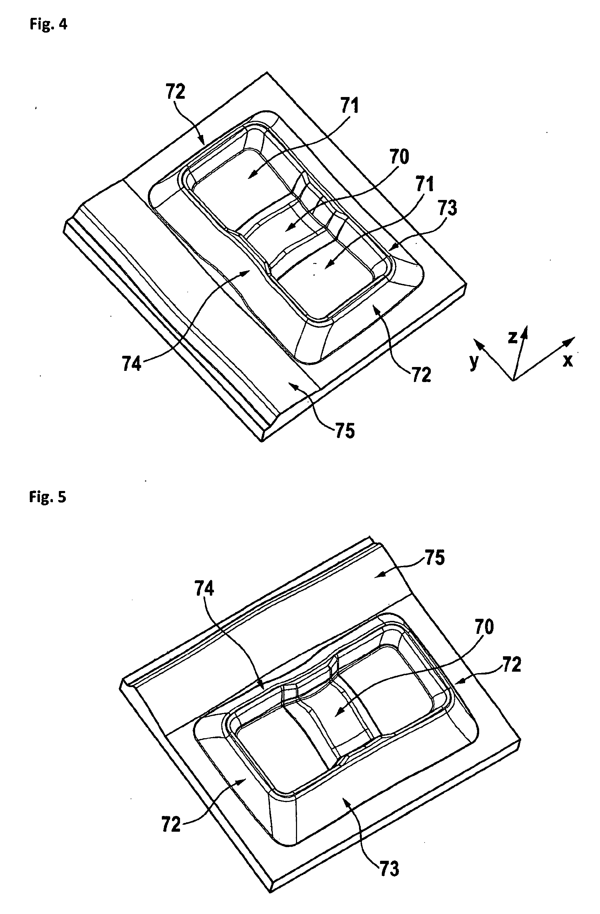

In der Figur 4 ist ein optisches System in einer ersten Ansicht dargestellt. Die Ausrichtung des Koordinatensystems entspricht der vorhergehenden Figur. Ein zentrales optisches Element 70 ist umschlossen von einem zweiten optischen Element mit dem Querseiten 72 und den Längsseiten 73 und 74. Dieses umschließt weiterhin die äußeren optischen Bereiche 71, welche auf gegenüberliegenden Seiten neben dem zentralen optischen Element liegen. Hinter der Längsseite 74 des zweiten optischen Elements liegt noch bevorzugterweise ein drittes optisches Element 75. Das dritte optische Element 75 ist bevorzugt näherungsweise linear. Es kann somit ein gemeinsames längeres drittes optisches Element 75 für eine Mehrzahl von optischen Systemen 50 vorgesehen sein, wie dies beispielsweise in der Figur 3 dargestellt ist.

In der Figur 5 ist das optische System in einer Ansicht gedreht zu vorigen Ansicht dargestellt.

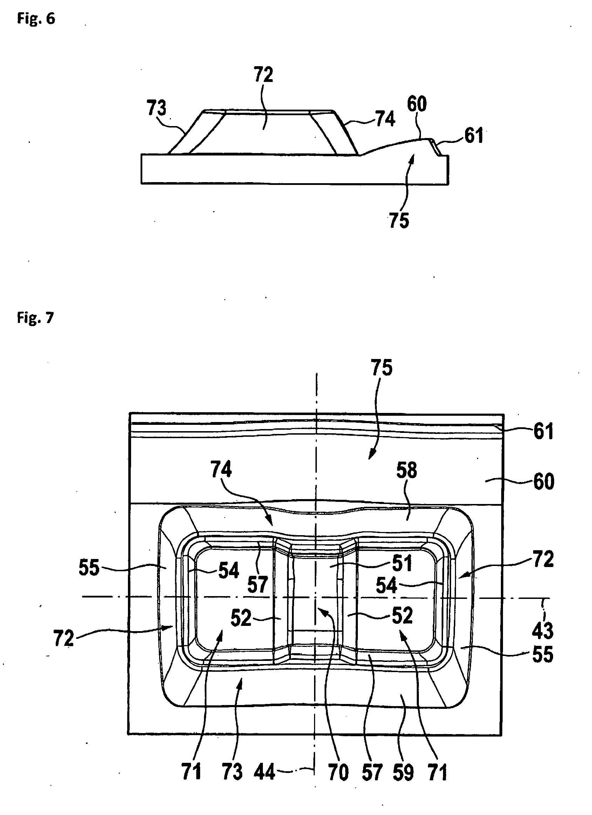

In der Figur 6 ist das optische System in einer seitlichen Ansicht dargestellt. Hier sind zwei vorzugsweise konvexe Seiten 60, 61 des dritten optischen Elements 75 dargestellt.

In der Figur 7 ist das optische System in einer Draufsicht gezeigt. Hier sind auch die einzelnen Teilelemente bezeichnet. Es sind eine erste Schnittebene 43 und eine zweite Schnittebene 44 eingezeichnet, auf die später noch Bezug genommen wird. Das zentrale optische Element 70 hat eine optische Fläche, die auf gegenüberliegenden Seiten von Verbindungsabschnitten 52 begrenzt wird und in die äußeren optischen Bereiche 71 übergeht. Ein zweites optisches Element umschließt sowohl das zentrale optische Element wie auch die äußeren optischen Bereiche. Hierzu hat das zweite optische Element zwei Querseiten 72, welche bevorzugt konvexe Abschnitte 54 und 55 aufweisen, also wie zwei Längsseiten 73 und 74, welche bevorzugt eine innere konvexe Seite 57 sowie eine äußere konkave Seite 59 bzw. eine äußere konvexe Seite 58 aufweisen.

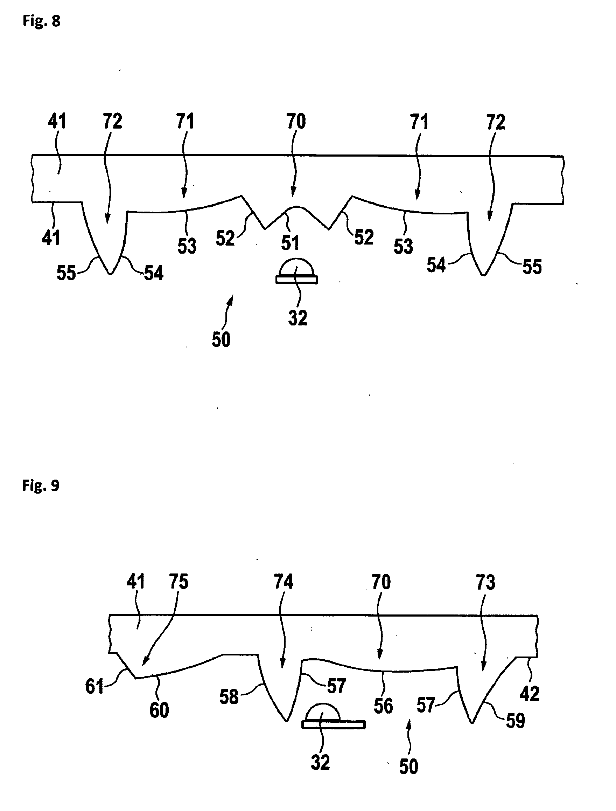

Um näher auf die Geometrie eines Ausführungsbeispiels eines optischen Systems für ein erfindungsgemäßes Lichtmodul 10 eingehen zu können, wird Bezug auf die Figuren 8 bis 9 genommen. Die Figuren 8 und 9 zeigen zwei Querschnitte durch die Abschlussscheibe 41, die zueinander senkrecht in Querschnittsebenen liegen. Dabei ist in Figur 8 die hauptsächlich für die große Reichweite der Lichtverteilung zuständige Ebene dargestellt. Die Figur zeigt 9 eine asymmetrische Querschnittsfläche. In Figur 8 ist zu erkennen, dass zentral ein zentrales optisches Element 70, welches bevorzugt einen zumindest stückweise konkaven Mittelabschnitt 51 aufweist, vorgesehen ist, das einen Großteil des Lichts vom Leuchtmittel 32 auffängt. Besonders bevorzugt ist der Mittelabschnitt 51 in einer Art Glockenkurve (konvex-konkav-konvex) ausgeführt. Anschließend erstrecken sich zwei Verbindungsabschnitte 52 zu den benachbarten äußeren optischen Bereichen 71 mit vorzugsweise konvexen Abschnitten 53. Prinzipiell sind die konvexen Außenflächen 71 eine Fortführung der inneren Fläche des Mittelabschnitts 51, unterbrochen durch die Verbindungsabschnitte 52, welche die Wandstärke der Optik reduziert (ähnlich einer Fresnel- Linse). Diese sind von dem zweiten optischen Element 72, welches bevorzugt die konvexen Abschnitte 54, 55 umfasst, umschlossen. Die sich daraus ergebenden nasenförmigen Fortsätze könnten in direktem Kontakt mit der Platine 30 stehen. Es wird bevorzugt Leuchtmittel 32 von dem optischen System 50 umgeben, sodass Licht vom Leuchtmittel 32 in das optische System 50 eingekoppelt wird.

In Figur 9 ist ein zu Figur 8 senkrechter Querschnitt dargestellt, wobei eine im Wesentlichen ebene beziehungsweise deutlich weniger stark gekrümmte Ausbildung der optisch aktiven Flächen zu erkennen ist. Dadurch wird eine Asymmetrie hinsichtlich der Querschnitte des optischen Systems 50 erzeugt, sodass dementsprechend auch eine asymmetrische, insbesondere rechteckige Ausleuchtung durch das Lichtmodul erzielt werden kann. So hat der Zentralbereich 70 einen nur schwach gekrümmten Mittelabschnitt 56. An den Zentralbereich 70 schließt das zweite optische Element an, welches hier unterschiedlich ausgebildete Seiten hat. Hierbei hat bevorzugt eine erste Längsseite 74 mit zwei konvexen Seiten 57, 58, während die zweite Längsseite 73 eine konvexe Seite 57 und eine konkave Seite 59 hat. Hinter der ersten Längsseite 74 befindet sich noch das dritte optische Element 75, welches bevorzugt zwei konvexe Seiten hat. Die erste Längsseite 74 wirkt als Totalreflexionsfläche, welche aufgrund ihrer Nähe zur Lichtquelle einen hohen Anteil des Lichts aus dem Bereich "hinter der Leuchte" auf die Vorderseite reflektiert.

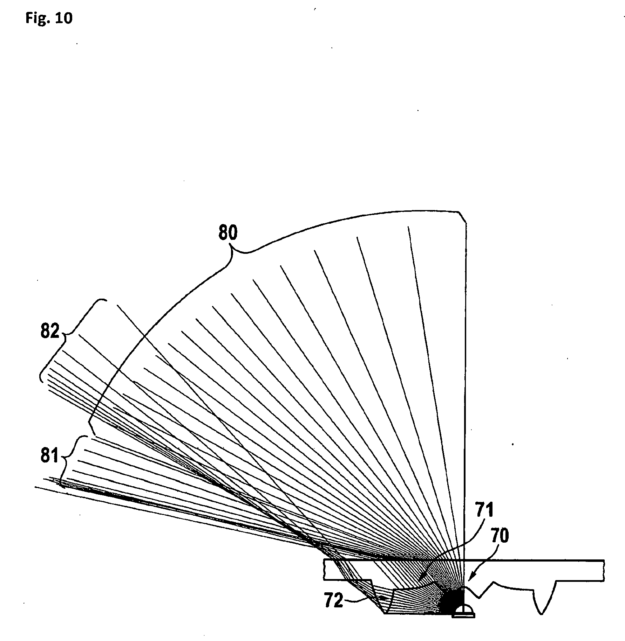

Die Figur 10 zeigt Strahlengänge in dem ersten Querschnitt. Der Übersichtlichkeit halber ist hier nur die linke Hälfte dargestellt. Aufgrund der Symmetrie der Anordnung ist die rechte Hälfte hierzu spiegelsymmetrisch durch die Mitte der LED. Licht, welches von der LED durch das zentrale optische Element 70 tritt, folgt den Strahlengängen 80. Es ist das zentrale Beleuchtungsfeld der Anordnung. Weiterhin folgt Licht, welches durch die äußeren optischen Bereiche 71 geführt wird, den Strahlengängen 81. Schließlich ergeben sich durch eine Führung des Lichts durch das zweite optische Element die Strahlengänge 82, welche bevorzugt wiederum den durch die Strahlengänge 80 ausgeleuchteten Bereich beleuchten. Dies sorgt für eine höhere Lichtintensität in den meist nur schwach ausgeleuchteten Randbereichen.

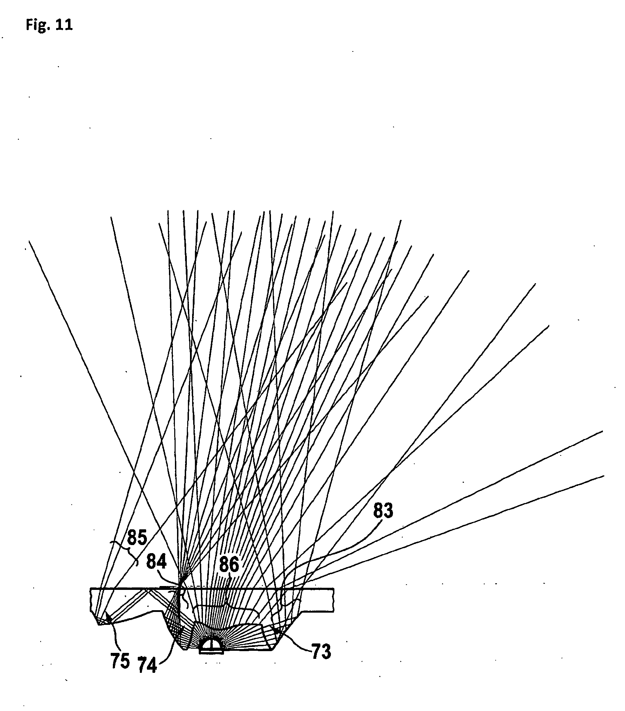

In der Figur 11 sind Strahlengänge in dem zweiten Querschnitt dargestellt. Hier wird nicht, welches durch das zentrale optische Element 71 tritt, mittels der Strahlengänge 86 in einem zentralen Bereich gelenkt. Licht, welches durch die Seiten 73 bzw. 74 des zweiten optischen Elements geleitet wird, wird entsprechend der Strahlengänge 73 bzw. 74 in Richtung des zentralen Bereichs hinein abgelenkt. Ebenso wird Licht, welches durch das dritte optische Element 75 geleitet wird, entsprechend den Strahlengängen 85 in den zentralen Bereich hinein gelenkt.

### Bezugszeichenliste

- 10: Lichtmodul
- 20: Platinenaufnahme
- 30: Platine
- 32: Leuchtmittel
- 40: Abdeckung
- 41: Abschlussscheibe
- 42: Innenseite der Abschlussscheibe
- 43: erste Schnittebene
- 44: zweite Schnittebene
- 50: Optisches System
- 51: Mittelabschnitt
- 52: Verbindungsabschnitt
- 53, 54, 55: Konvexer Abschnitt
- 56: Mittelabschnitt
- 57, 58, 60, 61: konvexe Seite
- 59: konkave Seite
- 70: zentrales optisches Element
- 71: äußerer optischer Bereich
- 72: zweites optisches Element, Querseite
- 73, 74: zweites optisches Element, Längsseiten
- 75: drittes optisches Element
- 80, 86: Strahlengang durch das zentrale optische Element
- 81: Strahlengang durch die äußeren optischen Bereiche
- 82, 83, 84: Strahlengang durch das zweite optische Element
- 85: Strahlengang durch das dritte optische Element
- 100: Außenleuchte

## Patentansprüche

1. Lichtmodul (10) für eine Außenleuchte (100), aufweisend
- eine Platinenaufnahme (20),
- zumindest eine in der Platinenaufnahme (20) angeordnete Platine (30) mit einer Vielzahl von LEDs (32) zur Erzeugung von Licht mit einem Strahlengang (80, 81, 82, 83, 84, 85, 86),
- eine Abdeckung (40), welche die Platinenaufnahme (20) sowie die darin angeordnete Platine (30) abdeckt, wobei die Abdeckung eine Abschlussscheibe (41) aufweist,
- die lichtdurchlässig ist, um das von den LEDs (32) erzeugte Licht durchzulassen, und
- die auf der Innenseite eine Vielzahl von optischen Systemen (50) für die Beeinflussung des Strahlengangs (80, 81, 82, 83, 84, 85, 86) aufweist, wobei jedem Leuchtmittel (32) genau ein optisches System (50) zugeordnet ist,
**dadurch gekennzeichnet, dass**
die optischen Systeme folgendes umfassen:
- ein zentrales optisches Element (70), welches unmittelbar über dem Leuchtmittel angeordnet ist,
- zwei äußere optische Bereiche (71) an gegenüberliegenden Seiten des zentralen optischen Elements (70),
- ein zweites optisches Element (72, 73, 74), welches das zentrale optische Element (70) und die zwei äußeren optische Bereiche (71) seitlich umschließt und mindestens eine Längsseite (73, 74) aufweist, und
- ein drittes optisches Element (75), welches sich linear außerhalb des zweiten optischen Elements (72, 73, 74) parallel zu einer Längsseite (73, 74) erstreckt.

2. Lichtmodul (10) nach Anspruch 1,
**dadurch gekennzeichnet, dass**
die Außenseite der Abschlussscheibe (41) zumindest abschnittsweise planar ausgebildet ist.

3. Lichtmodul (10) nach einem der vorangegangenen Ansprüche,
**dadurch gekennzeichnet, dass**
die optischen Systeme (50) für eine asymmetrische Verteilung des Lichts ausgebildet sind.

4. Lichtmodul (10) nach einem der vorangegangenen Ansprüche,
**dadurch gekennzeichnet, dass**
die optischen Systeme (50) für eine hohe Reichweite bei großen Abstrahlwinkeln des Lichts ausgebildet sind.

5. Lichtmodul (10) nach einem der vorangegangenen Ansprüche, **dadurch gekennzeichnet, dass** jedes optische System (50) durch eine Vertiefung und oder Erhöhung auf der Innenseite (41a) der Abschlussscheibe (41) ausgebildet ist.

6. Lichtmodul (10) nach Anspruch 5,
**dadurch gekennzeichnet, dass**
jedes optische System (50) in einer ersten Querschnittsebene (43) einen ersten Querschnitt und in einer zu der ersten Querschnittsebene senkrechten zweiten Querschnittsebene (44) einen zweiten Querschnitt aufweist, wobei der erste Querschnitt und der zweite Querschnitt unterschiedlich ausgeformt sind.

7. Lichtmodul (10) nach Anspruch 6,
**dadurch gekennzeichnet, dass**
das zentrale optisches Element (70) in dem ersten Querschnitt zumindest stückweise konkav und/oder konvex- konkav- konvex ausgebildet ist.

8. Lichtmodul (10) nach Anspruch 6 oder 7,
**dadurch gekennzeichnet, dass**
die zwei äußeren optischen Bereiche (71) in dem ersten Querschnitt konvex ausgebildet sind.

9. Lichtmodul (10) nach Anspruch 6, 7 oder 8,
**dadurch gekennzeichnet, dass**
zwischen dem zentralen optischen Element (70) und den zwei äußeren optischen Bereichen (71) jeweils ein Verbindungsabschnitt (52) vorhanden ist, der parallel zu dem Strahlengang (80, 81) verläuft.

10. Lichtmodul (10) nach einem der Ansprüche 6 bis 9,
**dadurch gekennzeichnet, dass**
das zweite optisches Element (72, 73, 74) in dem ersten Querschnitt konvexe Seiten (54, 55) aufweist.

11. Lichtmodul (10) nach einem der Ansprüche 6 bis 10,
**dadurch gekennzeichnet, dass**
das zweite optisches Element (72, 73, 74) in dem zweiten Querschnitt konvexe Seiten (57, 58) sowie wenigstens eine konkave Seite (59) aufweist.

12. Lichtmodul (10) nach einem der Ansprüche 6 bis 10,
**dadurch gekennzeichnet, dass**
das dritte optische Element (75) in dem zweiten Querschnitt konvexe Seiten aufweist.

13. Lichtmodul (10) nach einem der vorhergehenden Ansprüche,
**dadurch gekennzeichnet, dass**
die Leuchtmittel (32) außerhalb der Mitte des jeweiligen optischen Systems (50) angeordnet sind.

14. Außenleuchte (100) umfassend wenigstens ein Lichtmodul (10) nach einem der vorhergehenden Ansprüche.

## Claims

1. Light module (10) for an exterior light (100), comprising
- a circuit board holder (20),
- at least one circuit board (30) disposed in the circuit board holder (20) comprising a plurality of LEDs (32) for generating light having a beam path (80, 81, 82, 83, 84, 85, 86),
- a cover (40) which covers the circuit board holder (20) and the circuit board (30) disposed therein, wherein the cover comprises a transparent cover (41),
- which is permeable to light in order to transmit the light produced by the LEDs (32) and
- which has on the inner side a plurality of optical systems (50) for influencing the beam path (80, 81, 82, 83, 84, 85, 86), wherein precisely one optical system (50) is assigned to each illuminant (32),
**characterized in that**
the optical systems comprise the following:
- a central optical element (70), which is disposed directly above the illuminant,
- two outer optical regions (71) on the opposite sides of the central optical element (70),
- a second optical element (72, 73, 74) which laterally encloses the central optical element (70) and the two outer optical regions (71) and has at least one longitudinal side (73, 74) and
- a third optical element (75) which extends linearly outside the second optical element (72, 73, 74) parallel to a longitudinal side (73, 74).

2. The light module (10) according to claim 1,
**characterized in that**
the outer side of the transparent cover (41) is configured to be planar at least in sections.

3. The light module (10) according to one of the preceding claims,
**characterized in that**
the optical systems (50) are configured for an asymmetric distribution of the light.

4. The light module (10) according to one of the preceding claims,
**characterized in that**
the optical systems (50) are configured for a high range with large emission angles of the light.

5. The light module (10) according to one of the preceding claims,
**characterized in that** each optical system (50) is formed by a recess and/or elevation on the inner side (41a) of the transparent cover (41).

6. The light module (10) according to claim 5,
**characterized in that** each optical system (50) has a first cross-section in a first cross-sectional plane (43) and a second cross-section in a second cross-sectional plane (44) perpendicular to the first cross-sectional plane, wherein the first cross-section and the second cross-section are formed differently.

7. The light module (10) according to claim 6,
**characterized in that**
the central optical element (70) is configured to be concave and/or convex-concave-convex in the first cross-section at least in a piecewise manner.

8. The light module (10) according to claim 6 or 7,
**characterized in that**
the two outer optical regions (71) in the first cross-section are configured to be convex.

9. The light module (10) according to claim 6, 7 or 8,
**characterized in that** respectively one connecting section (52) is provided between the central optical element (70) and the two outer optical regions (71), which runs parallel to the beam path (80, 81).

10. The light module (10) according to one of claims 6 to 9,
**characterized in that** the second optical element (72, 73, 74) has convex sides (54, 55) in the first cross-section.

11. The light module (10) according to one of claims 6 to 10,
**characterized in that** the second optical element (72, 73, 74) has convex sides (57, 58) in the second cross-section and at least one concave side (59).

12. The light module (10) according to one of claims 6 to 10,
**characterized in that** the third optical element (75) has convex sides in the second cross-section.

13. The light module (10) according to one of the preceding claims,
**characterized in that**
the illuminants (32) are disposed outside the centre of the respective optical system (50).

14. Exterior light (100) comprising at least one light module (10) according to one of the preceding claims.

## Revendications

1. Module lumineux (10) pour un luminaire d'extérieur (100), comprenant
- un logement de carte de circuits (20),
- au moins une carte de circuits (30) disposée dans le logement de carte de circuits (20) avec plusieurs DEL (32) destinées à produire de la lumière avec un trajet des rayons (80, 81, 82, 83, 84, 85, 86),
- une couverture (40) qui couvre le logement de carte de circuits (20) et la carte de circuits (30) disposée dans celui-ci, laquelle couverture comprend une plaque de fermeture (41),
- qui est translucide afin de laisser passer la lumière produite par les DEL (32), et
- qui présente sur sa face intérieure plusieurs systèmes optiques (50) destinés à influer sur le trajet des rayons (80, 81, 82, 83, 84, 85, 86), chaque lampe (32) étant associée à exactement un système optique (50),
**caractérisé en ce que** les systèmes optiques comprennent :
- un élément optique central (70) qui est disposé immédiatement au-dessus de la lampe,
- deux zones optiques extérieures (71) sur des côtés opposés de l'élément optique central (70),
- un deuxième élément optique (72, 73, 74) qui entoure latéralement l'élément optique central (70) et les deux zones optiques extérieures (71) et qui présente au moins un grand côté (73, 74), et
- un troisième élément optique (75) qui s'étend de façon linéaire en dehors du deuxième élément optique (72, 73, 74) parallèlement à un grand côté (73, 74).

2. Module lumineux (10) selon la revendication 1, **caractérisé en ce que** la face extérieure de la plaque de fermeture (41) est de forme plane au moins par sections.

3. Module lumineux (10) selon l'une des revendications précédentes, **caractérisé en ce que** les systèmes optiques (50) sont conçus en vue d'une répartition asymétrique de la lumière.

4. Module lumineux (10) selon l'une des revendications précédentes, **caractérisé en ce que** les systèmes optiques (50) sont conçus pour avoir une grande portée avec de grands angles de rayonnement de la lumière.

5. Module lumineux (10) selon l'une des revendications précédentes, **caractérisé en ce que** chaque système optique (50) est formé par un creux et/ou une saillie sur la face intérieure (41a) de la plaque de fermeture (41).

6. Module lumineux (10) selon la revendication 5, **caractérisé en ce que** chaque système optique (50) présente une première section dans un premier plan de section (43) et une deuxième section dans un deuxième plan de section (44) perpendiculaire au premier plan de section, la première section et la deuxième section étant de forme différente.

7. Module lumineux (10) selon la revendication 6, **caractérisé en ce que** l'élément optique central (70) a une forme au moins partiellement concave et/ou convexe-concave-convexe dans la première section.

8. Module lumineux (10) selon la revendication 6 ou 7, **caractérisé en ce que** les deux zones optiques extérieures (71) ont une forme convexe dans la première section.

9. Module lumineux (10) selon la revendication 6, 7 ou 8, **caractérisé en ce qu'**il est prévu entre l'élément optique central (70) et chacune des deux zones optiques extérieures (71) une partie de liaison (52) qui est parallèle au trajet des rayons (80, 81).

10. Module lumineux (10) selon l'une des revendications 6 à 9, **caractérisé en ce que** le deuxième élément optique (72, 73, 74) présente des côtés convexes (54, 55) dans la première section.

11. Module lumineux (10) selon l'une des revendications 6 à 10, **caractérisé en ce que** le deuxième élément optique (72, 73, 74) présente des côtés convexes (57, 58) et au moins un côté concave (59) dans la deuxième section.

12. Module lumineux (10) selon l'une des revendications 6 à 10, **caractérisé en ce que** le troisième élément optique (75) présente des côtés convexes dans la deuxième section.

13. Module lumineux (10) selon l'une des revendications précédentes, **caractérisé en ce que** la lampe (32) est disposée en dehors du milieu du système optique (50) correspondant.

14. Luminaire d'extérieur (100) comprenant au moins un module lumineux (10) selon l'une des revendications précédentes.
